# EUROPEAN PATENT SPECIFICATION

(11) **EP 4 421 840 B1**
(45) Date of publication and mention of the grant of the patent: **04.02.2026**
(21) Application number: 23866683.8
(22) Date of filing: 15.12.2023
(51) Int. Cl.: H01H 31/12, H01H 31/28, H01H 33/02, H01H 33/666, H01H 9/26, H01H 85/042, H01H 85/175, H02H 7/00, H02H 7/22, H02H 7/26, H01H 89/00

(54) **INTELLIGENT OUTDOOR COMBINATION ELECTRICAL DEVICE FOR GRID-CONNECTED AND OFF-GRID CONTROL PROTECTION OF MEDIUM-VOLTAGE MICROGRID**
INTELLIGENTE ELEKTRISCHE AUSSENKOMBINATIONSVORRICHTUNG FÜR NETZGEKOPPELTEN UND NETZUNABHÄNGIGEN STEUERUNGSSCHUTZ EINES MITTELSPANNUNGSMIKRONETZES
DISPOSITIF ÉLECTRIQUE COMBINÉ EXTÉRIEUR INTELLIGENT POUR PROTECTION DE COMMANDE CONNECTÉE AU RÉSEAU ET HORS RÉSEAU D'UN MICRO-RÉSEAU MOYENNE TENSION

(30) Priority: 03.04.2023 CN 202310344268
(43) Date of publication of application: 28.08.2024
(73) Proprietor: China Electric Power Research Institute, Beijing 100192 (CN); State Grid Corporation of China (SGCC), Beijing 100031 (CN); Chint Electric Corporation, Shanghai 201614 (CN)
(72) Inventor: WANG, Haoqing, Beijing 100192 (CN); SHENG, Wanxing, Beijing 100192 (CN); DUAN, Qing, Beijing 100192 (CN); QI, Hui, Shanghai 201614 (CN); LIU, Ning, Beijing 100192 (CN); WANG, Junkai, Shanghai 201614 (CN); ZHAO, Caihong, Beijing 100192 (CN); SHA, Guanglin, Beijing 100192 (CN); MA, Chunyan, Beijing 100192 (CN); ZHANG, Yao, Beijing 100192 (CN); WU, Yunzhao, Beijing 100192 (CN); LIU, Lu, Beijing 100192 (CN); LI, Jia, Beijing 100192 (CN); ZHOU, Kun, Shanghai 201614 (CN); LI, Mingming, Shanghai 201614 (CN); QIN, Xingqiang, Shanghai 201614 (CN)
(74) Representative: White, Andrew John
(86) International application number: PCT/CN2023/139100
(87) International publication number: WO 2024/149021

(56) References cited:
- CN-A- 108 962 666
- CN-A- 116 418 039
- CN-U- 201 966 163
- CN-U- 202 601 497
- CN-U- 202 601 497
- CN-U- 207 425 767
- CN-U- 207 425 767
- CN-U- 208 834 975
- CN-U- 208 834 975
- CN-U- 208 889 594
- CN-U- 216 597 483
- CN-U- 216 597 483
- CN-U- 217 361 385
- CN-U- 217 933 517
- KR-B1- 101 104 145

## Description

### TECHNICAL FIELD

The disclosure relates to, but is not limited to, the field of switchgear of medium-voltage outdoor circuit breaker and enclosed-type jet type fuse applied thereto, and in particular to a smart outdoor switchgear for control and protection of connection and disconnection of a medium-voltage microgrid.

### BACKGROUND

A circuit breaker is a switch apparatus which may make, carry and break current under normal circuit conditions, and may make, carry and break current under abnormal circuit conditions within a specified period of time. The circuit breaker may be used to distribute electrical energy and to achieve control and protection of power lines.

An outdoor circuit breaker is generally installed on an outdoor telegraph pole. In order to fully ensure safe operation of the entire line, a fuse is generally further configured on a high-voltage side of a 12kV (kilovolt) distribution transformer or on a trunk line of the distribution line, which can achieve the protection of short-circuit and overload of the transformer and the line. Compared to an indoor circuit breaker, the operating environment of the outdoor circuit breaker is worse, and manual closing and opening operations on the isolating switch requires the help of special work. The operation thereof is difficult, and the whole process is complex. Related technologies can be found at least in patent document CN202601497U.

### SUMMARY

As to the shortcomings of the related art, an embodiment of the disclosure provides a smart outdoor switchgear for control and protection of connection and disconnection of a medium-voltage microgrid.

The present invention is set out in the appended set of claims.

Compared with the closest related art, the disclosure has the following beneficial effects.

A smart outdoor switchgear for control and protection of connection and disconnection of a medium-voltage microgrid includes: a current transformer 1, an isolating switch mechanism 2, an outdoor circuit breaker, an electric isolating driving mechanism 5 and an outdoor jet type fuse 6. The current transformer 1 is installed on an outlet end of the outdoor circuit breaker. The isolating switch mechanism 2 is connected to the current transformer 1, and the isolating switch mechanism 2 is connected to the outlet end of the outdoor circuit breaker through the current transformer 1. A top of the isolating switch mechanism 2 on a side away from the current transformer 1 is connected to a top of the outdoor jet type fuse 6, and a bottom of the isolating switch mechanism 2 on the side away from the current transformer 1 is connected to a bottom of the outdoor jet type fuse 6. The electric isolating driving mechanism 5 is installed on the bottom of the isolating switch mechanism 2. With the apparatus provided by the embodiments of the disclosure, the outdoor jet type fuse 6 and the isolating switch mechanism 2 are designed integrally, which solves the problem that the lead structure form of the outdoor jet type fuse 6 cannot be integrally installed with the isolating switch mechanism 2. The isolating switch mechanism 2 that adopts the electric isolating driving mechanism 5 may realize opening and closing without manual operations, and combines the outdoor circuit breaker, the electric isolating driving mechanism 5 and the outdoor jet type fuse 6 into one with integrated design and complete set. The structure of the apparatus is centralized and compact. The structural layout is reasonable. The space is compact. The installation is convenient.

### BRIEF DESCRIPTION OF THE DRAWINGS

The drawings here are incorporated into the specification and form a part of the specification. The drawings illustrate embodiments consistent with the disclosure and are used in combination with the specification to illustrate the technical solutions of the disclosure.
FIG. 1 is a diagram of a smart outdoor switchgear for control and protection of connection and disconnection of a medium-voltage microgrid.
FIG. 2 is a first diagram of an isolating switch mechanism of a smart outdoor switchgear for control and protection of connection and disconnection of a medium-voltage microgrid.
FIG. 3 is a second diagram of an isolating switch mechanism of a smart outdoor switchgear for control and protection of connection and disconnection of a medium-voltage microgrid.
FIG. 4 is a diagram of a motor driving portion of an electric isolating driving mechanism of a smart outdoor switchgear for control and protection of connection and disconnection of a medium-voltage microgrid.
FIG. 5 is a cross-sectional view of an electric isolating driving mechanism of a smart outdoor switchgear for control and protection of connection and disconnection of a medium-voltage microgrid.
FIG. 6 is a side-sectional view of a linkage protection solution of an electric isolating switch and an outdoor circuit breaker of a smart outdoor switchgear for control and protection of connection and disconnection of a medium-voltage microgrid.
FIG. 7 is a side-sectional view of an outdoor jet type fuse of a smart outdoor switchgear for control and protection of connection and disconnection of a medium-voltage microgrid.
FIG. 8 is a cross-sectional view of an outdoor jet type fuse of a smart outdoor switchgear for control and protection of connection and disconnection of a medium-voltage microgrid.

### DECRIPTION OF REFERENCE NUMERALS

1-current transformer, 2-isolating switch mechanism, 3-pole of the outdoor circuit breaker, 4-mechanism of the outdoor circuit breaker, 5-electric isolating driving mechanism, 6-outdoor jet type fuse, 201-current transformer support column, 202-manual operating lever, 203-right board of the base frame, 204-driving shaft, 205-knife switch support column, 206-holding crank arm, 207-driven crank arm, 208-transverse board of the base frame, 209- first driving connecting rod, 210-isolating insulating board, 211-knife switch, 212-crossbeam of the base frame, 213-left board of the base frame, 501-closing stop switch, 502-driving motor, 503-driving pinion, 504-driven gearwheel, 505-micro cam, 506-opening stop switch, 507-driving crank, 508-second driving connecting rod, 509-lower stop block, 510-mechanical block, 511-interlocking fixed plate, 512-upper stop block, 601-upper static contact, 602-composite insulating umbrella skirt, 603-installation board, 604-lower outlet connection port, 605-upper movable contact, 606-connecting tube, 607-fusion tube, 608-arc-suppressing tube, 609-marking part, 610-sealing plate, 611-lower static contact, 612-epoxy resin base, 613-lower movable contact, 614-annular groove.

### DETAILED DESCRIPTION

Specific implementations of the disclosure are illustrated in further detail below in combination with the drawings.

### Embodiment 1:

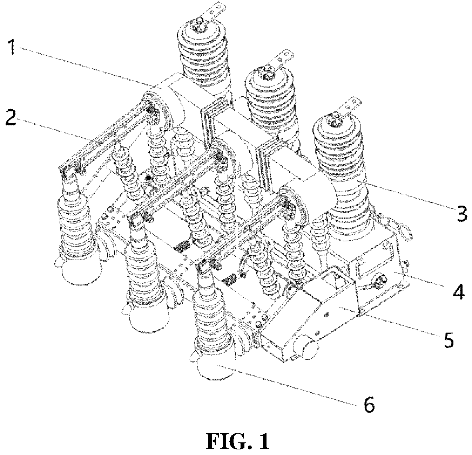

An embodiment of the disclosure provides a smart outdoor switchgear for control and protection of connection and disconnection of a medium-voltage microgrid. As shown in FIG. 1, the apparatus includes: a current transformer 1, an isolating switch mechanism 2, an outdoor circuit breaker, an electric isolating driving mechanism 5 and an outdoor jet type fuse 6.

The current transformer 1 is installed on an outlet end of the outdoor circuit breaker. The isolating switch mechanism 2 is connected to the current transformer 1, and the isolating switch mechanism 2 is connected to the outlet end of the outdoor circuit breaker through the current transformer 1. A top of the isolating switch mechanism 2 on a side away from the current transformer 1 is connected to the top of the outdoor jet type fuse 6, and a bottom of the isolating switch mechanism 2 on the side away from the current transformer 1 is connected to a bottom of the outdoor jet type fuse 6. The electric isolating driving mechanism 5 is installed on a bottom of the isolating switch mechanism 2.

A pole 3 of the outdoor circuit breaker is installed on a mechanism 4 of the outdoor circuit breaker, and an internal mechanism of the mechanism 4 of the outdoor circuit breaker is actuated so as to realize the vacuum bubble opening and closing power system inside the pole 3 of the outdoor circuit breaker. The current transformer 1 is installed on the outlet end of the pole of the outdoor circuit breaker through a support column. The electric isolating driving mechanism 5 is installed on a side of a left board 213 of the base frame, and the main function of the electric isolating driving mechanism 5 is to provide power for a driving shaft 204 so as to realize opening and closing between a knife switch 211 and the power system. The outdoor jet type fuse 6 is installed in an installing hole on an inner side of a transverse board 208 of the base frame, and the entire outdoor jet type fuse 6 is side-installed.

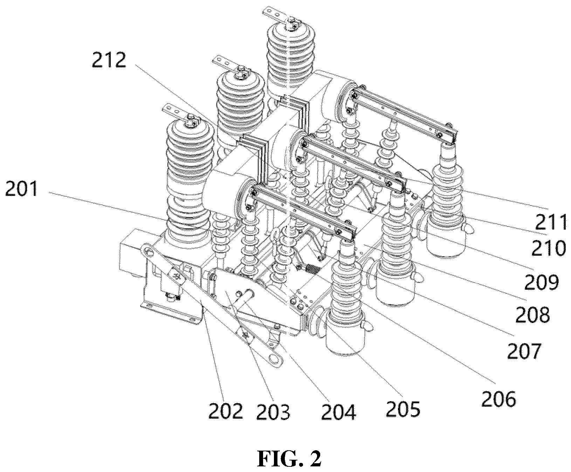

As shown in FIG. 2, the isolating switch mechanism 2 includes a current transformer support column 201, a driving mechanism, a base frame, a knife switch support column 205, an isolating insulating board 210 and a knife switch 211.

The base frame is set on a bottom of the outdoor circuit breaker and is on a same side as the current transformer 1. The current transformer support column 201 and the knife switch support column 205 are set on the base frame, and the current transformer 1 is installed on ends of the current transformer support column 201 and the knife switch support column 205 away from the base frame. An end of the knife switch 211 is fixed on the knife switch support column 205, and a middle section of the knife switch 211 is connected to the driving mechanism by a pin shaft. An end of the driving mechanism away from the knife switch 211 is connected to the base frame. The electric isolating driving mechanism 5 is set on a side of the base frame. The electric isolating driving mechanism 5 is connected to the driving mechanism, and the electric isolating driving mechanism 5 is configured to drive the driving mechanism and to realize opening and closing of the knife switch 211. The isolating insulating board 210 is installed between the base frame and the outdoor jet type fuse 6.

In some embodiments, the driving mechanism includes a driving shaft 204, a holding crank arm 206, a driving crank arm 207 and a first driving connecting rod 209.

The driving shaft 204 runs through the base frame, and the electric isolating driving mechanism 5 is connected to the driving shaft 204. The electric isolating driving mechanism 5 is configured to drive the driving shaft 204 and to realize the opening and the closing of the knife switch 211. The holding crank arm 206 and the driving crank arm 207 are set on the driving shaft 204 at an interval by pin shafts, and the driving shaft 204 is connected to an end of the holding crank arm 206 and an end of the driving crank arm 207 respectively. The other end of the holding crank arm 206 is installed on the base frame, and the other end of the driving crank arm 207 is connected to the knife switch 211 through the first driving connecting rod 209.

In some embodiments, the base frame includes a right board 203 of the base frame, a transverse board 208 of the base frame, a crossbeam 212 of the base frame and a left board 213 of the base frame.

The right board 203 of the base frame and the left board 213 of the base frame are set opposite each other. Each one of two ends of the driving shaft 204 penetrates through a respective one of the right board 203 of the base frame and the left board 213 of the base frame. The transverse board 208 of the base frame and the crossbeam 212 of the base frame are set between the right board 203 of the base frame and the left board 213 of the base frame. The outdoor jet type fuse 6 is set on a side of the transverse board 208 of the base frame, and the isolating insulating board 210 is installed between the transverse board 208 of the base frame and the outdoor jet type fuse 6. The crossbeam 212 of the base frame is installed on the bottom of the outdoor circuit breaker and is on the same side as the current transformer 1, and the electric isolating driving mechanism 5 is set on the left board 213 of the base frame.

In some embodiments, the driving mechanism further includes a manual operating lever 202. The manual operating lever 202 is set on an end of the driving shaft 204 penetrating through the right board 203 of the base frame.

When an opening operation is performed by the outdoor circuit breaker, a tool is used to pull the manual operating lever 202, so that the driving shaft 204 is driven to rotate. The driving shaft 204 is installed on the base frame consisting of the right board 203 of the base frame, the transverse board 208 of the base frame, the crossbeam 212 of the base frame etc.,. The driving crank arm 207 is installed on the driving shaft 204, and the first driving connecting rod 209 is connected to the driving crank arm 207 by a pin shaft. An end of the knife switch 211 is connected to the first driving connecting rod 209 by a pin shaft, and the other end of the knife switch 211 is fixed on the support column 205. The driving shaft 204 rotates and drives the driving crank arm 207 to rotate. The driving crank arm 207 drives the first driving connecting rod 209 to move upwardly to realize the opening operation. The current transformer 1 is installed above the current transformer support column 201 and the knife switch support column 205. The holding crank arm 206 is installed on the driving shaft 204, and the main function of the holding crank arm 206 is to play a holding role for the knife switch of the entire isolating switch to ensure closing to be in place. The isolating insulating board 210 is installed between two elements, i.e., the transverse board 208 of the base frame and the outdoor jet type fuse 6, which reduces the effects on the body of the isolating switch from the electric arc of faulty opening and closing of the fuse.

The outdoor jet type fuse is installed, so that a switchgear with multiple protection is formed, which may guarantee safety and reliability of the power transmission.

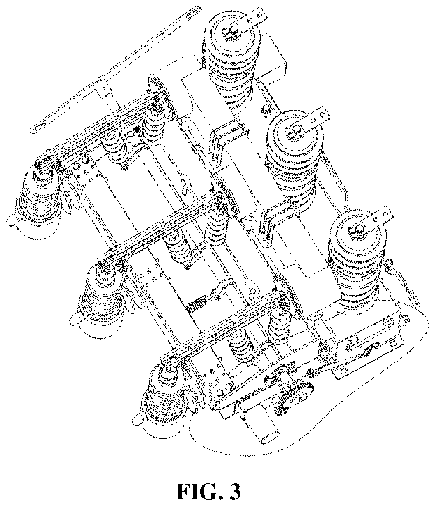

The location of the electric isolating driving mechanism is shown in FIG. 3. The electric isolating driving mechanism 5 includes an opening mechanism, a closing mechanism and a stopper apparatus. The opening mechanism and the closing mechanism are set at an interval on an end of the driving shaft 204 penetrating through the left board 213 of the base frame, and the stopper apparatus is set between the opening mechanism and the left board 213 of the base frame.

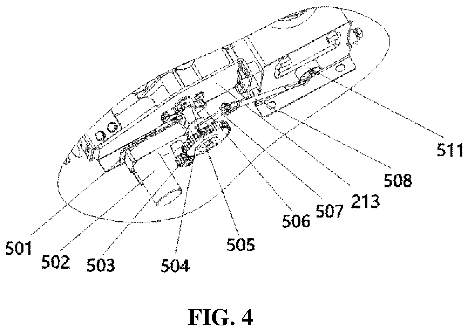

As shown in FIG. 4, the opening mechanism includes a driving motor 502, a driving pinion 503, a driven gearwheel 504, a micro cam 505 and an opening stop switch 506.

The driving motor 502 is installed on the left board 213 of the base frame. A side of the driving motor 502 away from the left board 213 of the base frame is connected to the driving pinion 503, and the driven gearwheel 504 is set above the driving pinion 503. The driving pinion 503 is connected to the driven gearwheel 504 and drives the driven gearwheel 504 to rotate. The driven gearwheel 504 and the micro cam 505 are installed on the driving shaft 204.

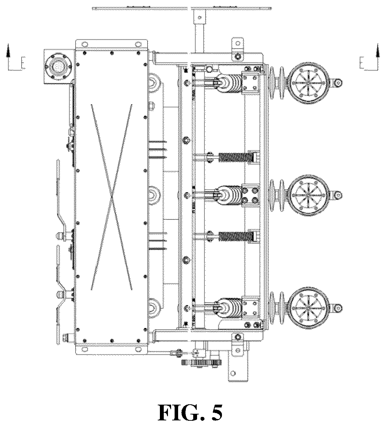

When the driving shaft 204 rotates to an opening position, the driven gearwheel 504 drives the micro cam 505 and the driving shaft 204 to simultaneously rotate to contact the opening stop switch 506, and the opening stop switch 506 operates to cut off a power supply of the driving motor 502. The cross-sectional view is illustrated in FIG. 5.

When an electric operation is performed by the outdoor circuit breaker, the driving motor 502 is installed on the side of the left board 213 of the base frame and drives the driving pinion 503 to rotate. The driving pinion 503 drives the driven gearwheel 504 to operate. The driven gearwheel 504 is installed on the driving shaft 204, and the driven gearwheel 504 rotates to drive the driving shaft 204 to rotate, thereby completing the opening or closing operation. The micro cam 505 is installed on the driving shaft 204 and rotates with the driving shaft 204 simultaneously. When the driving shaft 204 rotates to the opening position, the micro switch cam 505 contacts the opening stop switch 506, and the opening stop switch 506 operates such that the power supply for the driving motor 502 is cut off. When the driving shaft 204 rotates to a closing position, the micro switch cam 505 contacts the closing stop switch 501, and the closing stop switch 501 operates such that the power supply for the driving motor 502 is cut off.

An isolating switch that adopts an electric mechanism may realize opening and closing without manual operations. In addition, the operating reliability is ensured by electrical stopping and mechanical stopping.

In some embodiments, the closing mechanism includes a closing stop switch 501, a driving crank 507, a second driving connecting rod 508 and an interlocking fixed plate 511*.*

An end of the driving crank 507 is installed on the driving shaft 204, and the other end of the driving crank 507 is installed on the second driving connecting rod 508. An end of the second driving connecting rod 508 away from the driving crank 507 is connected to the interlocking fixed plate 511, and the interlocking fixed plate 511 is set on the outdoor circuit breaker. The driving shaft 204 drives the driving crank 507 to rotate, and the driving crank 507 drives the second driving connecting rod 508 to move.

When the driving shaft 204 rotates to a closing position, the driven gearwheel 504 drives the micro switch cam 505 and the driving shaft 204 to simultaneously rotate to contact the closing stop switch 501, and the closing stop switch 501 operates to cut off the power supply of the driving motor 502.

When the isolating switch is in an opening state, an end of the driving crank 507 is installed on the driving shaft 204, and another end of the driving crank 507 is installed on the second driving connecting rod 508. Another end of the second driving connecting rod 508 has an oblong hole connected to the interlocking fixed plate 511. When the driving shaft 204 rotates, the driving shaft 204 drives the driving crank 507 to rotate. The driving crank 507 rotates to drive the second connecting rod 508 to move, and the second driving connecting rod 508 moves to drive the interlocking fixed plate 512 to rotate. When the driving shaft 204 rotates to the closing position, the interlocking fixed plate 511 rotates to an interlocking position simultaneously. In such case, if the closing operation is performed by the circuit breaker, interlocking of the isolating switch and the circuit breaker is realized. If the opening operation is not performed by the circuit breaker, the isolating switch cannot be open.

Normally closed points of the closing stop switch 501 and the opening stop switch 506 are respectively connected in series in the control circuit of the driving motor 502. After the closing or opening is in place, the normally closed point of the closing stop switch 501 or the normally closed point of the opening stop switch 506 is switched to a normally open point. The control circuit of the driving motor 502 is disconnected such that the power supply for the driving motor 502 is cut off (the power supply of the driving motor 502 is cut off passively because the control circuit is disconnected).

The driving motor 502 is a DC driving motor, and its forward and reverse (corresponding to moving directions of closing and opening) rotation instructions are given by a higher-level control system.

In some embodiments, the stopper apparatus includes a lower stop block 509, a mechanical block 510 and an upper stop block 512.

The lower stop block 509 and the upper stop block 512 are installed on a sidewall of the left board 213 of the base frame. The mechanical block 510 is installed on the driving shaft 204, and the opening mechanism is installed on an end of the mechanical block 510 away from the driving shaft 204.

When the driving shaft 204 rotates counterclockwise under drive of the driving motor 502, the mechanical block 510 contacts the lower stop block 509, the lower stop block 509 restricts movement of the mechanical block 510, and closing is in place.

When the driving shaft 204 rotates clockwise under the drive of the driving motor 502, the mechanical block 510 contacts the upper stop block 512, the upper stop block 512 restricts the movement of the mechanical block 510, and the closing is in place.

The lower stop block 509 and the upper stop block 512 are fixed on the sidewall of the left board 213 of the base frame, and the mechanical block 510 is installed on the driving shaft 204. When the driving shaft 204 rotates counterclockwise under the drive of the driving motor 502 and the movement reaches a certain stage, the mechanical block 510 contacts the lower stop block 509, the lower block 509 restricts the movement of 510, and the closing is in place. When the driving shaft 204 rotates clockwise under the drive of the driving motor 502 and the movement reaches a certain stage, the mechanical block 510 contacts the upper stop block 512, the upper block 512 restricts the movement of 510, and the closing is in place.

In some embodiments, the outdoor circuit breaker includes a pole 3 of the outdoor circuit breaker and a mechanism 4 of the outdoor circuit breaker.

The pole 3 of the outdoor circuit breaker is installed on the mechanism 4 of the outdoor circuit breaker. The mechanism 4 of the outdoor circuit breaker is installed on a side of the isolating switch mechanism 2, and an outlet end of the pole 3 of the outdoor circuit breaker is connected to the current transformer 1.

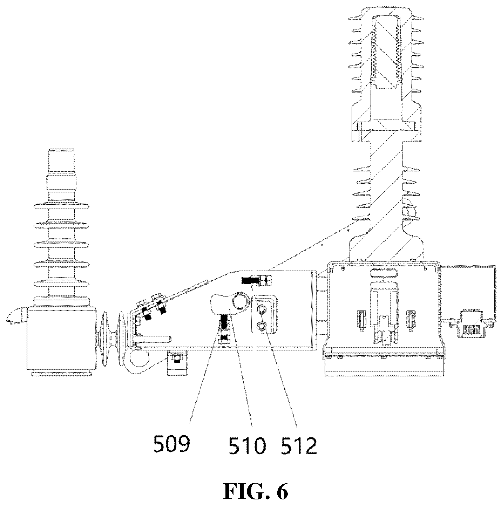

As shown in FIG. 6, the outdoor jet type fuse 6 includes a contact assembly, a composite insulating umbrella skirt 602, a lower outlet connection port 604, an epoxy resin base 612 and a sealing plate 610.

The composite insulating umbrella skirt 602 is wrapped around an outer side of the contact assembly. The epoxy resin base 612 is set on an end of the contact assembly, and the epoxy resin base 612 is connected to a bottom of a side of the isolating switch mechanism 2 away from the current transformer 1. Another end of the contact assembly away from the epoxy resin base 612 is connected to a top of the side of the isolating switch mechanism 2 away from the current transformer 1. The lower outlet connection port 604 is set below the composite insulating umbrella skirt 602, a lower static contact 611 is connected to the lower outlet connection port 604 through a conductive tape, and the sealing plate 610 is installed on a bottom of the epoxy resin base 612.

The upper contact structure form of the outdoor jet type fuse 6 facilitates the realization of the opening and closing operations of the circuit breaker on the matched outdoor column. In addition, the side-installed manner may effectively protect the device from being damaged.

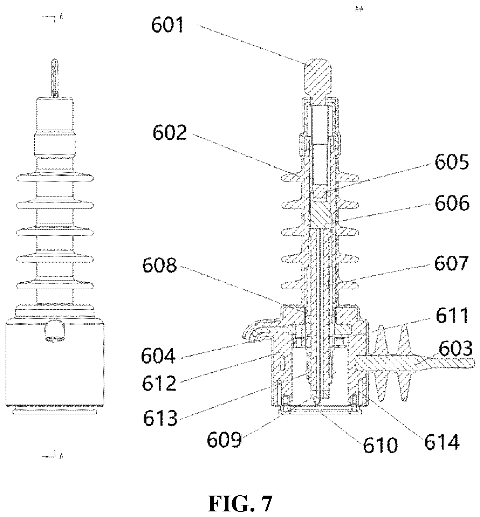

As shown in FIG. 7, the contact assembly includes an upper static contact 601, an upper movable contact 605, a connecting tube 606, a fusion tube 607, an arc-suppressing tube 608, a marking part 609, a lower movable contact 613 and the lower static contact 611.

The upper static contact 601 is set above the composite insulating umbrella skirt 602, and the upper static contact 601 is movably connected to the knife switch 211. An end of the upper static contact 601 away from the knife switch 211 is connected to the upper movable contact 605. The connecting tube 606 is installed on an end of the upper movable contact 605 away from the upper static contact 601. An end of the connecting tube 606 away from the upper movable contact 605 is connected to the fusion tube 607. The fusion tube 607 is set in the arc-suppressing tube 608. The arc-suppressing tube 608 is set in the epoxy resin base 612, and the lower static contact 611 is installed below the arc-suppressing tube 608. The marking part 609 is installed on a bottom of the lower static contact 611. The lower movable contact 613 is set below the fusion tube 607, and the lower movable contact 613 is connected to the lower static contact 611.

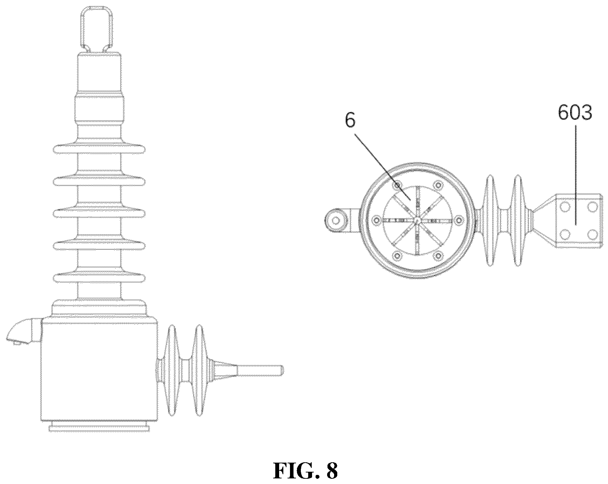

In some embodiments, the outdoor jet type fuse 6 further includes an installation board 603. The installation board 603 is set on the epoxy resin base 612. The installation board 603 is configured to install the outdoor jet type fuse 6 on the isolating switch mechanism 2, and the installation board 603 is poured outside with a layer of epoxy resin. The cross-sectional view of the connection between the outdoor jet type fuse 6 and the installation board 603 is illustrated in FIG. 8.

The design integrating the inlet line on the fuse and the static contact base of the isolating switch is realized, and the ZW32-type column installed circuit breaker, the electric isolating switch and the jet type fuse are combined into one with integrated design and complete set.

In some embodiments, an annular groove 614 is set on the bottom of the epoxy resin base 612.

The epoxy resin base 612 is installed on the bottom, and the sealing plate 610 is installed on the bottom of the epoxy resin base 612. The arc-suppressing tube 608 is set in the base. The fusion tube 607 is set in the arc-suppressing tube 608. The connecting tube 606 is set on the fusion tube 607. The upper movable contact 605 is set in the connecting tube 606. The lower static contact 611 is set below the arc-suppressing tube 608. The lower static contact 611 is connected to the outlet connection port 604 through a conductive tape. The marking part 609 is set on the bottom of the lower static contact 611. The lower movable contact 613 is set below the fusion tube 607. The lower movable contact 613 is in full and firm contact with the lower static contact 611. The bottom of the fusion tube 607 is covered with a booster spring, and the installation board 603 is set on the epoxy resin base 612, which facilitates the fixation on the isolating switch. The installation board 603 is poured inside the epoxy resin together with the fuse. The annular groove 614 is dug below the base, which facilitates increasing creepage distance and improving insulating capability.

When a fault occurs in the system, the fault current causes the fuse in the fusion tube 607 to fuse rapidly and form an arc. The gas in the arc-suppressing tube 608 is burned by the arc and causes a high pressure. An arc blow along the piping is formed. The arc is rapidly stretched and extinguished to form an electrical fracture, such that the faulty line or faulty device may be cut off. In addition, the marking part 609 pops out under action of a spring, which facilitates the detection and replacement by the maintainer.

The fuse fixed structure of a composite material mechanism is adopted to replace the traditional ceramic support structure, which effectively reduces the problem of cracking of the ceramic support structure after opening failure of the fuse.

A fuse of a vertical downward sealing structure is adopted, which enables a compact installing, a convenient operation and a strong environmental resistance.

Finally, it is to be noted that the above embodiments are only used to illustrate the technical solutions of the disclosure rather than to limit the scope of protection. Although a detailed description of the disclosure is performed with reference to the above embodiments, those of ordinary skill in the art should understand that: those skilled in the art may still perform a variety of changes, modifications or equivalent replacements on the specific implementations of the disclosure after reading the disclosure, but these changes, modifications or equivalent replacements shall fall within the scope of protection of the pending claims of the disclosure.

### INDUSTRIAL APPLICABILITY

The disclosure provides a smart outdoor switchgear for control and protection of connection and disconnection of a medium-voltage microgrid, which includes: a current transformer, an isolating switch mechanism, an outdoor circuit breaker, an electric isolating driving mechanism and an outdoor jet type fuse. The current transformer is installed on an outlet end of the outdoor circuit breaker. The isolating switch mechanism is connected to the current transformer, and the isolating switch mechanism is connected to the outlet end of the outdoor circuit breaker through the current transformer. A top of the isolating switch mechanism on a side away from the current transformer is connected to a top of the outdoor jet type fuse, and a bottom of the isolating switch mechanism on the side away from the current transformer is connected to a bottom of the outdoor jet type fuse. The electric isolating driving mechanism is installed on the bottom of the isolating switch mechanism. The outdoor jet type fuse and the isolating switch mechanism are designed integrally, which solves the problem that the lead structure form of the outdoor jet type fuse cannot be integrally installed with the isolating switch mechanism.

## Claims

1. A smart outdoor switchgear for control and protection of connection and disconnection of a medium-voltage microgrid, comprising: a current transformer (1), an isolating switch mechanism (2), an outdoor circuit breaker, an electric isolating driving mechanism (5) and an outdoor jet type fuse (6);
wherein the current transformer (1) is installed on an outlet end of the outdoor circuit breaker, the isolating switch mechanism (2) is connected to the current transformer (1), the isolating switch mechanism (2) is connected to the outlet end of the outdoor circuit breaker through the current transformer (1), a top of the isolating switch mechanism (2) on a side away from the current transformer (1) is connected to a top of the outdoor jet type fuse (6), a bottom of the isolating switch mechanism (2) on the side away from the current transformer (1) is connected to a bottom of the outdoor jet type fuse (6), and the electric isolating driving mechanism (5) is installed on a bottom of the isolating switch mechanism (2);
wherein the outdoor jet type fuse (6) comprises a contact assembly, a composite insulating umbrella skirt (602), a lower outlet connection port (604), an epoxy resin base (612) and a sealing plate (610); and
the composite insulating umbrella skirt (602) is wrapped around an outer side of the contact assembly, the epoxy resin base (612) is set on an end of the contact assembly, the epoxy resin base (612) is connected to a bottom of a side of the isolating switch mechanism (2) away from the current transformer (1), another end of the contact assembly away from the epoxy resin base (612) is connected to a top of the side of the isolating switch mechanism (2) away from the current transformer (1), the lower outlet connection port (604) is set below the composite insulating umbrella skirt (602), a lower static contact (611) is connected to the lower outlet connection port (604) through a conductive tape, and the sealing plate (610) is installed on a bottom of the epoxy resin base (612);
wherein the contact assembly comprises an upper static contact (601), an upper movable contact (605), a connecting tube (606), a fusion tube (607), an arc-suppressing tube (608), a marking part (609), a lower movable contact (613) and the lower static contact (611); and
the upper static contact (601) is set above the composite insulating umbrella skirt (602), the upper static contact (601) is movably connected to a knife switch (211) of the isolating switch mechanism (2), an end of the upper static contact (601) away from the knife switch (211) is connected to the upper movable contact (605), the connecting tube (606) is installed on an end of the upper movable contact (605) away from the upper static contact (601), an end of the connecting tube (606) away from the upper movable contact (605) is connected to the fusion tube (607), the fusion tube (607) is set in the arc-suppressing tube (608), the arc-suppressing tube (608) is set in the epoxy resin base (612), the lower static contact (611) is installed below the arc-suppressing tube (608), the marking part (609) is installed on a bottom of the lower static contact (611), the lower movable contact (613) is set below the fusion tube (607), and the lower movable contact (613) is connected to the lower static contact (611); wherein a bottom of the fusion tube (607) is covered with a booster spring; when a fault occurs in a system, the marking part (609) pops out under an action of the booster spring;
wherein the outdoor jet type fuse (6) further comprises an installation board (603), the installing board (603) is set on the epoxy resin base (612), the installing board (603) is configured to install the outdoor jet type fuse (6) on the isolating switch mechanism (2), and the installing board (603) is poured outside with a layer of epoxy resin;
wherein an annular groove (614) is set on the bottom of the epoxy resin base (612); wherein the annular groove (614) is used for increasing a creepage distance and improving an insulating capability.

2. The smart outdoor switchgear of claim 1, wherein the isolating switch mechanism (2) comprises a current transformer support column (201), a driving mechanism, a base frame, a knife switch support column (205), an isolating insulating board (210) and the knife switch (211); and
the base frame is set on a bottom of the outdoor circuit breaker and is on a same side as the current transformer (1), the current transformer support column (201) and the knife switch support column (205) are set on the base frame, the current transformer (1) is installed on ends of the current transformer support column (201) and the knife switch support column (205) away from the base frame, an end of the knife switch (211) is fixed on the knife switch support column (205), a middle section of the knife switch (211) is connected to the driving mechanism by a pin shaft, an end of the driving mechanism away from the knife switch (211) is connected to the base frame, the electric isolating driving mechanism (5) is set on a side of the base frame, the electric isolating driving mechanism (5) is connected to the driving mechanism, the electric isolating driving mechanism (5) is configured to drive the driving mechanism and to realize opening and closing of the knife switch (211), and the isolating insulating board (210) is installed between the base frame and the outdoor jet type fuse (6).

3. The smart outdoor switchgear of claim 2, wherein the driving mechanism comprises a driving shaft (204), a holding crank arm (206), a driving crank arm (207) and a first driving connecting rod (209); and
the driving shaft (204) runs through the base frame, the electric isolating driving mechanism (5) is connected to the driving shaft (204), the electric isolating driving mechanism (5) is configured to drive the driving shaft (204) and to realize the opening and the closing of the knife switch (211), the holding crank arm (206) and the driving crank arm (207) are set on the driving shaft (204) at an interval by pin shafts, the driving shaft (204) is connected to an end of the holding crank arm (206) and an end of the driving crank arm (207) respectively, another end of the holding crank arm (206) is installed on the base frame, and another end of the driving crank arm (207) is connected to the knife switch (211) through the first driving connecting rod (209).

4. The smart outdoor switchgear of claim 3, wherein the base frame comprises a right board (203) of the base frame, a transverse board (208) of the base frame, a crossbeam (212) of the base frame and a left board (213) of the base frame; and
the right board (203) of the base frame and the left board (213) of the base frame are set opposite each other, each one of two ends of the driving shaft (204) penetrates through a respective one of the right board (203) of the base frame and the left board (213) of the base frame, the transverse board (208) of the base frame and the crossbeam (212) of the base frame are set between the right board (203) of the base frame and the left board (213) of the base frame, the outdoor jet type fuse (6) is set on a side of the transverse board (208) of the base frame, the isolating insulating board (210) is installed between the transverse board (208) of the base frame and the outdoor jet type fuse (6), the crossbeam (212) of the base frame is installed on the bottom of the outdoor circuit breaker and is on the same side as the current transformer (1), and the electric isolating driving mechanism (5) is set on the left board (213) of the base frame.

5. The smart outdoor switchgear of claim 4, wherein the driving mechanism further comprises a manual operating lever (202), and the manual operating lever (202) is set on an end of the driving shaft (204) penetrating through the right board (203) of the base frame.

6. The smart outdoor switchgear of claim 4, wherein the electric isolating driving mechanism (5) comprises an opening mechanism, a closing mechanism and a stopper apparatus, the opening mechanism and the closing mechanism are set at an interval on an end of the driving shaft (204) penetrating through the left board (213) of the base frame, and the stopper apparatus is set between the opening mechanism and the left board (213) of the base frame.

7. The smart outdoor switchgear of claim 6, wherein the opening mechanism comprises a driving motor (502), a driving pinion (503), a driven gearwheel (504), a micro cam (505) and an opening stop switch (506);
the driving motor (502) is installed on the left board (213) of the base frame, a side of the driving motor (502) away from the left board (213) of the base frame is connected to the driving pinion (503), the driven gearwheel (504) is set above the driving pinion (503), the driving pinion (503) is connected to the driven gearwheel (504) and drives the driven gearwheel (504) to rotate, and the driven gearwheel (504) and the micro cam (505) are installed on the driving shaft (204); and
when the driving shaft (204) rotates to an opening position, the driven gearwheel (504) drives the micro cam (505) and the driving shaft (204) to simultaneously rotate to contact the opening stop switch (506), and the opening stop switch (506) operates to cut off a power supply of the driving motor (502).

8. The smart outdoor switchgear of claim 7, wherein the closing mechanism comprises a closing stop switch (501), a driving crank (507), a second driving connecting rod (508) and an interlocking fixed plate (511);
an end of the driving crank (507) is installed on the driving shaft (204), another end of the driving crank (507) is installed on the second driving connecting rod (508), an end of the second driving connecting rod (508) away from the driving crank (507) is connected to the interlocking fixed plate (511), the interlocking fixed plate (511) is set on the outdoor circuit breaker, the driving shaft (204) drives the driving crank (507) to rotate, and the driving crank (507) drives the second driving connecting rod (508) to move; and
when the driving shaft (204) rotates to a closing position, the driven gearwheel (504) drives the micro cam (505) and the driving shaft (204) to simultaneously rotate to contact the closing stop switch (501), and the closing stop switch (501) operates to cut off the power supply of the driving motor (502).

9. The smart outdoor switchgear of claim 6, wherein the stopper apparatus comprises a lower stop block (509), a mechanical block (510) and an upper stop block (512);
the lower stop block (509) and the upper stop block (512) are installed on a sidewall of the left board (213) of the base frame, the mechanical block (510) is installed on the driving shaft (204), and the opening mechanism is installed on an end of the mechanical block (510) away from the driving shaft (204);
when the driving shaft (204) rotates counterclockwise under drive of a driving motor (502), the mechanical block (510) contacts the lower stop block (509), the lower stop block (509) restricts movement of the mechanical block (510), and closing is in place; and
when the driving shaft (204) rotates clockwise under the drive of the driving motor (502), the mechanical block (510) contacts the upper stop block (512), the upper stop block (512) restricts the movement of the mechanical block (510), and the closing is in place.

10. The smart outdoor switchgear of any one of claims 1 to 9, wherein the outdoor circuit breaker comprises a pole (3) of the outdoor circuit breaker and a mechanism (4) of the outdoor circuit breaker; and
the pole (3) of the outdoor circuit breaker is installed on the mechanism (4) of the outdoor circuit breaker, the mechanism (4) of the outdoor circuit breaker is installed on a side of the isolating switch mechanism (2), and an outlet end of the pole (3) of the outdoor circuit breaker is connected to the current transformer (1).

## Patentansprüche

1. Intelligente Außenschaltanlage zur Steuerung und zum Schutz des Ein- und Ausschaltens eines Mittelspannungs-Mikronetzes, umfassend: einen Stromwandler (1), einen Trennschaltermechanismus (2), einen Außenleistungsschalter, einen elektrischen Trennantriebsmechanismus (5) und eine Außensprungsicherung (6);
wobei der Stromwandler (1) an einem Ausgangsende des Außenleistungsschalters angebracht ist, der Trennschaltermechanismus (2) mit dem Stromwandler (1) verbunden ist, der Trennschaltermechanismus (2) über den Stromwandler (1) mit dem Ausgangsende des Außenleistungsschalters verbunden ist, eine Oberseite des Trennschaltermechanismus (2) auf der vom Stromwandler (1) abgewandten Seite mit einer Oberseite der Außensprungsicherung (6) verbunden ist, eine Unterseite des Trennschaltermechanismus (2) auf der vom Stromwandler (1) abgewandten Seite mit einer Unterseite der Außensprungsicherung (6) verbunden ist und der elektrische Trennantriebsmechanismus (5) an einer Unterseite des Trennschaltermechanismus (2) angebracht ist;
wobei die Außensprungsicherung (6) eine Kontaktbaugruppe, einen zusammengesetzten isolierenden Schirmrand (602), einen unteren Auslassanschluss (604), einen Epoxidharzsockel (612) und eine Dichtungsplatte (610) umfasst; und
der zusammengesetzte isolierende Schirmrand (602) um die Außenseite der Kontaktbaugruppe gewickelt ist, der Epoxidharzsockel (612) an einem Ende der Kontaktbaugruppe angeordnet ist, der Epoxidharzsockel (612) mit einer Unterseite einer Seite des Trennschaltermechanismus (2) verbunden ist, die vom Stromwandler (1) weggerichtet ist, ein anderes Ende der Kontaktbaugruppe, das von der Epoxidharzbasis (612) weggerichtet ist, mit einer Oberseite der Seite des Trennschaltermechanismus (2) verbunden ist, die vom Stromwandler (1) weggerichtet ist, der untere Auslassanschluss (604) unterhalb des zusammengesetzten isolierenden Schirmrandes (602) angeordnet ist, ein unterer statischer Kontakt (611) über ein leitfähiges Band mit dem unteren Auslassanschluss (604) verbunden ist, und die Dichtungsplatte (610) an einer Unterseite des Epoxidharzsockels (612) angebracht ist;
wobei die Kontaktbaugruppe einen oberen statischen Kontakt (601), einen oberen beweglichen Kontakt (605), ein Verbindungsrohr (606), ein Schmelzrohr (607), ein Lichtbogenunterdrückungsrohr (608), ein Markierungsteil (609), einen unteren beweglichen Kontakt (613) und den unteren statischen Kontakt (611) umfasst; und
der obere statische Kontakt (601) über dem zusammengesetzten isolierenden Schirmrand (602) angeordnet ist, der obere statische Kontakt (601) beweglich mit einem Messerschalter (211) des Trennschaltermechanismus (2) verbunden ist, ein vom Messerschalter (211) weggerichtetes Ende des oberen statischen Kontakts (601) mit dem oberen beweglichen Kontakt (605) verbunden ist, das Verbindungsrohr (606) an einem Ende des oberen beweglichen Kontakts (605) angebracht ist, das vom oberen statischen Kontakt (601) weggerichtet ist, ein Ende des Verbindungsrohrs (606), das vom oberen beweglichen Kontakt (605) weggerichtet ist, mit dem Schmelzrohr (607) verbunden ist, das Schmelzrohr (607) in dem Lichtbogenunterdrückungsrohr (608) angeordnet ist, das Lichtbogenunterdrückungsrohr (608) im Epoxidharzsockel (612) angeordnet ist, der untere statische Kontakt (611) unterhalb des Lichtbogenunterdrückungsrohrs (608) angebracht ist, das Markierungsteil (609) an einer Unterseite des unteren statischen Kontakts (611) angebracht ist, der untere bewegliche Kontakt (613) unterhalb des Schmelzrohrs (607) angeordnet ist, und der untere bewegliche Kontakt (613) mit dem unteren statischen Kontakt (611) verbunden ist; wobei der Boden des Schmelzrohrs (607) mit einer Verstärkerfeder abgedeckt ist; wenn ein Fehler in einem System auftritt, das Markierungsteil (609) unter der Wirkung der Verstärkerfeder herausspringt;
wobei die Außensprungsicherung (6) ferner eine Montageplatte (603) umfasst, die Montageplatte (603) auf dem Epoxidharzsockel (612) angeordnet ist, die Montageplatte (603) konfiguriert ist, um die Außensprungsicherung (6) auf dem Trennschaltermechanismus (2) zu montierten, und die Montageplatte (603) außen mit einer Schicht aus Epoxidharz übergossen ist;
wobei eine ringförmige Nut (614) am Boden des Epoxidharzsockels (612) angeordnet ist; wobei die ringförmige Nut (614) dazu dient, den Kriechweg zu vergrößern und die Isolierfähigkeit zu verbessern.

2. Intelligente Außenschaltanlage nach Anspruch 1, wobei der Trennschaltermechanismus (2) eine Stromwandler-Tragsäule (201), einen Antriebsmechanismus, einen Grundrahmen, eine Messerschalter-Tragsäule (205), eine trennende Isolierplatte (210) und den Messerschalter (211) umfasst; und
der Grundrahmen am Boden des Außenleistungsschalters angeordnet ist und sich auf derselben Seite wie der Stromwandler (1) befindet, die Stromwandler-Stützsäule (201) und die Messerschalter-Stützsäule (205) auf dem Grundrahmen angeordnet sind, der Stromwandler (1) an den Enden der Stromwandler-Stützsäule (201) und der Messerschalter-Stützsäule (205) weggerichtet vom Grundrahmen angebracht ist, ein Ende des Messerschalters (211) an der Messerschalter-Stützsäule (205) befestigt ist, ein mittlerer Abschnitt des Messerschalters (211) über eine Stiftwelle mit dem Antriebsmechanismus verbunden ist, ein vom Messerschalter (211) weggerichtetes Ende des Antriebsmechanismus mit dem Grundrahmen verbunden ist, der elektrisch isolierte Antriebsmechanismus (5) an einer Seite des Grundrahmens angeordnet ist, der elektrisch isolierte Antriebsmechanismus (5) mit dem Antriebsmechanismus verbunden ist, der elektrisch isolierte Antriebsmechanismus (5) konfiguriert ist, um den Antriebsmechanismus anzutreiben und das Öffnen und Schließen des Messerschalters (211) zu ermöglichen, und die trennende Isolierplatte (210) zwischen dem Grundrahmen und der Außensprungsicherung (6) angebracht ist.

3. Intelligente Außenschaltanlage nach Anspruch 2, wobei der Antriebsmechanismus eine Antriebswelle (204), einen Haltekurbelarm (206), einen Antriebskurbelarm (207) und eine erste Antriebsverbindungsstange (209) umfasst; und
die Antriebswelle (204) durch den Grundrahmen verläuft, der elektrisch isolierte Antriebsmechanismus (5) mit der Antriebswelle (204) verbunden ist, der elektrisch isolierte Antriebsmechanismus (5) konfiguriert ist, um die Antriebswelle (204) anzutreiben und das Öffnen und Schließen des Messerschalters (211) zu ermöglichen, der Haltekurbelarm (206) und der Antriebskurbelarm (207) in einem Abstand durch Stiftwellen auf der Antriebswelle (204) angeordnet sind, die Antriebswelle (204) jeweils mit einem Ende des Haltekurbelarms (206) und einem Ende des Antriebskurbelarms (207) verbunden ist, ein anderes Ende des Haltekurbelarms (206) am Grundrahmen angebracht ist, und ein anderes Ende des Antriebskurbelarms (207) über die erste Antriebsverbindungsstange (209) mit dem Messerschalter (211) verbunden ist.

4. Intelligente Außenschaltanlage nach Anspruch 3, wobei der Grundrahmen eine rechte Platte (203) des Grundrahmens, eine Querplatte (208) des Grundrahmens, einen Querträger (212) des Grundrahmens und eine linke Platte (213) des Grundrahmens umfasst; und
die rechte Platte (203) des Grundrahmens und die linke Platte (213) des Grundrahmens einander gegenüberliegend angeordnet sind, wobei jedes der beiden Enden der Antriebswelle (204) jeweils durch die rechte Platte (203) des Grundrahmens und die linke Platte (213) des Grundrahmens hindurchragt, die Querplatte (208) des Grundrahmens und der Querträger (212) des Grundrahmens zwischen der rechten Platte (203) des Grundrahmens und der linken Platte (213) des Grundrahmens angeordnet sind, die Außensprungsicherung (6) auf einer Seite der Querplatte (208) des Grundrahmens angeordnet ist, die isolierende Trennplatte (210) zwischen der Querplatte (208) des Grundrahmens und der Außensprungsicherung (6) angebracht ist, der Querträger (212) des Grundrahmens an der Unterseite des Außenleistungsschalters angebracht ist und sich auf derselben Seite wie der Stromwandler (1) befindet, und der elektrisch isolierte Antriebsmechanismus (5) an der linken Platte (213) des Grundrahmens angeordnet ist.

5. Intelligente Außenschaltanlage nach Anspruch 4, wobei der Antriebsmechanismus ferner einen manuellen Betätigungshebel (202) umfasst, und der manuelle Betätigungshebel (202) an einem Ende der Antriebswelle (204) angeordnet ist, die durch die rechte Platte (203) des Grundrahmens hindurchragt.

6. Intelligente Außenschaltanlage nach Anspruch 4, wobei der elektrisch isolierte Antriebsmechanismus (5) einen Öffnungsmechanismus, einen Schließmechanismus und eine Stoppervorrichtung umfasst, der Öffnungsmechanismus und der Schließmechanismus in einem Abstand an einem Ende der Antriebswelle (204) angeordnet sind, die durch die linke Platte (213) des Grundrahmens hindurchragt, und die Stoppervorrichtung zwischen dem Öffnungsmechanismus und der linken Platte (213) des Grundrahmens angeordnet ist.

7. Intelligente Außenschaltanlage nach Anspruch 6, wobei der Öffnungsmechanismus einen Antriebsmotor (502), ein Antriebsritzel (503), ein angetriebenes Zahnrad (504), einen Mikronocken (505) und einen Öffnungsendschalter (506) umfasst;
der Antriebsmotor (502) an der linken Platte (213) des Grundrahmens angebracht ist, eine Seite des Antriebsmotors (502), die von der linken Platte (213) des Grundrahmens weggerichtet ist, mit dem Antriebsritzel (503) verbunden ist, das angetriebene Zahnrad (504) oberhalb des Antriebsritzels (503) angeordnet ist, das Antriebsritzel (503) mit dem angetriebenen Zahnrad (504) verbunden ist und das angetriebene Zahnrad (504) zur Drehung antreibt, und das angetriebene Zahnrad (504) und der Mikronocken (505) an der Antriebswelle (204) angebracht sind; und
wenn sich die Antriebswelle (204) in eine Öffnungsposition dreht, das angetriebene Zahnrad (504) den Mikronocken (505) und die Antriebswelle (204) antreibt, um sich gleichzeitig zu drehen, um den Öffnungsstoppschalter (506) zu berühren, und der Öffnungsstoppschalter (506) betätigt wird, um die Stromversorgung des Antriebsmotors (502) zu unterbrechen.

8. Intelligente Außenschaltanlage nach Anspruch 7, wobei der Schließmechanismus einen Schließstoppschalter (501), eine Antriebskurbel (507), eine zweite Antriebsverbindungsstange (508) und eine formschlüssige feste Platte (511) umfasst;
ein Ende der Antriebskurbel (507) auf der Antriebswelle (204) angebracht ist, ein anderes Ende der Antriebskurbel (507) auf der zweiten Antriebsverbindungsstange (508) angebracht ist, ein Ende der zweiten Antriebsverbindungsstange (508), das von der Antriebskurbel (507) weggerichtet ist, mit der formschlüssigen festen Platte (511) verbunden ist, die formschlüssige feste Platte (511) am Außenleistungsschalter angeordnet ist, die Antriebswelle (204) die Antriebskurbel (507) zur Drehung antreibt und die Antriebskurbel (507) die zweite Antriebsverbindungsstange (508) zur Bewegung antreibt; und
wenn sich die Antriebswelle (204) in eine Schließposition dreht, das angetriebene Zahnrad (504) den Mikronocken (505) und die Antriebswelle (204) dazu antreibt, sich gleichzeitig zu drehen, um den Schließstoppschalter (501) zu berühren, und der Schließstoppschalter (501) betätigt wird, um die Stromversorgung des Antriebsmotors (502) zu unterbrechen.

9. Intelligente Außenschaltanlage nach Anspruch 6, wobei die Stoppervorrichtung einen unteren Anschlagblock (509), einen mechanischen Block (510) und einen oberen Anschlagblock (512) umfasst;
der untere Anschlagblock (509) und der obere Anschlagblock (512) an einer Seitenwand der linken Platte (213) des Grundrahmens angebracht sind, der mechanische Block (510) an der Antriebswelle (204) angebracht ist, und der Öffnungsmechanismus an einem Ende des mechanischen Blocks (510) angebracht ist, das von der Antriebswelle (204) weggerichtet ist;
wenn sich die Antriebswelle (204) unter dem Antrieb eines Antriebsmotors (502) gegen den Uhrzeigersinn dreht, der mechanische Block (510) den unteren Anschlagblock (509) berührt, der untere Anschlagblock (509) die Bewegung des mechanischen Blocks (510) begrenzt und der Verschluss aktiviert ist; und
wenn sich die Antriebswelle (204) unter dem Antrieb eines Antriebsmotors (502) im Uhrzeigersinn dreht, der mechanische Block (510) den oberen Anschlagblock (512) berührt, der obere Anschlagblock (512) die Bewegung des mechanischen Blocks (510) begrenzt und der Verschluss aktiviert ist.

10. Intelligente Außenschaltanlage nach einem der Ansprüche 1 bis 9, wobei der Außenleistungsschalter einen Pol (3) des Außenleistungsschalters und einen Mechanismus (4) des Außenleistungsschalters umfasst; und
der Pol (3) des Außenleistungsschalters am Mechanismus (4) des Außenleistungsschalters angebracht ist, der Mechanismus (4) des Außenleistungsschalters an einer Seite des Trennschaltermechanismus (2) angebracht ist, und ein Ausgangsende des Pols (3) des Außenleistungsschalters mit dem Stromwandler (1) verbunden ist.

## Revendications

1. Appareillage de commutation extérieur intelligent pour la commande et la protection de la connexion et de la déconnexion d'un miniréseau à moyenne tension, comprenant : un transformateur de courant (1), un mécanisme de commutateur d'isolement (2), un disjoncteur extérieur, un mécanisme d'entraînement à isolement électrique (5) et un fusible de type jet extérieur (6) ;
dans lequel le transformateur de courant (1) est installé sur une extrémité de sortie du disjoncteur extérieur, le mécanisme de commutateur d'isolement (2) est connecté au transformateur de courant (1), le mécanisme de commutateur d'isolement (2) est connecté à l'extrémité de sortie du disjoncteur extérieur par l'intermédiaire du transformateur de courant (1), une partie supérieure du mécanisme de commutateur d'isolement (2) sur un côté opposé au transformateur de courant (1) est connecté à une partie supérieure du fusible de type jet extérieur (6), une partie inférieure du mécanisme de commutateur d'isolement (2) sur côté opposé au transformateur de courant (1) est connecté à une partie inférieure du fusible de type jet extérieur (6), et le mécanisme d'entraînement à isolement électrique (5) est installé sur une partie inférieure du mécanisme de commutateur d'isolement (2) ;
dans lequel le fusible de type jet extérieur (6) comprend un ensemble contact, une jupe parapluie isolante composite (602), un orifice de connexion de sortie inférieur (604), une base en résine époxy (612) et une plaque d'étanchéité (610) ; et
la jupe parapluie isolante composite (602) est enroulée autour d'un côté externe de l'ensemble contact, la base en résine époxy (612) est placée sur une extrémité de l'ensemble contact, la base en résine époxy (612) est connectée à une partie inférieure d'un côté du mécanisme de commutateur d'isolement (2) opposé au transformateur de courant (1), une autre extrémité de l'ensemble contact opposée à la base en résine époxy (612) est connectée à une partie supérieure du côté du mécanisme de commutateur d'isolement (2) opposé au transformateur de courant (1), l'orifice de connexion de sortie inférieur (604) est placé au-dessous de la jupe parapluie isolante composite (602), un contact statique inférieur (611) est connecté à l'orifice de connexion de sortie inférieur (604) par une bande conductrice, et la plaque d'étanchéité (610) est installée sur une partie inférieure de la base en résine époxy (612) ;
dans lequel l'ensemble contacts comprend un contact statique supérieur (601), un contact mobile supérieur (605), un tube de connexion (606), un tube de fusion (607), un tube de suppression d'arc (608), une partie de marquage (609), un contact mobile inférieur (613) et le contact statique inférieur (611) ; et
le contact statique supérieur (601) est placé au-dessus de la jupe parapluie isolante composite (602), le contact statique supérieur (601) est connecté de manière mobile à un couteau de sectionnement (211) du mécanisme de commutateur d'isolement (2), une extrémité du contact statique supérieur (601) opposée au couteau de sectionnement (211) est connectée au contact mobile supérieur (605), le tube de connexion (606) est installé sur une extrémité du contact mobile supérieur (605) opposée au contact statique supérieur (601), une extrémité du tube de connexion (606) opposée au contact mobile supérieur (605) est connectée au tube de fusion (607), le tube de fusion (607) est placé dans le tube de suppression d'arc (608), le tube de suppression d'arc (608) est placé dans la base en résine époxy (612), le contact statique inférieur (611) est installé au-dessous du tube de suppression d'arc (608), la partie de marquage (609) est installée sur une partie inférieure du contact statique inférieur (611), le contact mobile inférieur (613) est placé au-dessous du tube de fusion (607), et le contact mobile inférieur (613) est connecté au contact statique inférieur (611) ; dans lequel la partie inférieure du tube de fusion (607) est recouvert d'un ressort de rappel ; lorsqu'un défaut survient dans un système, la partie de marquage (609) sort sous l'action du ressort de rappel ;
dans lequel le fusible de type jet extérieur (6) comprend en outre une plaque d'installation (603), la plaque d'installation (603) est placée sur la base en résine époxy (612), la plaque d'installation (603) est configurée pour installer le fusible de type jet extérieur (6) sur le mécanisme de commutateur d'isolement (2), et la plaque d'installation (603) est extérieurement versée avec une couche de résine époxy ;
dans lequel une rainure annulaire (614) est placée sur la partie inférieure de la base en résine époxy (612) ; dans lequel la rainure annulaire (614) est utilisée pour augmenter une ligne de fuite et améliorer une capacité d'isolement.

2. Appareillage de commutation extérieur intelligent selon la revendication 1, dans lequel le mécanisme de commutateur d'isolement (2) comprend une colonne de support de transformateur de courant (201), un mécanisme d'entraînement, un cadre de base, une colonne de support de couteau de sectionnement (205), un panneau isolant de sectionnement (210) et le couteau de sectionnement (211) ; et
le cadre de base est placé sur une partie inférieure du disjoncteur extérieur et est sur le même côté que le transformateur de courant (1), la colonne de support de transformateur de courant (201) et la colonne de support de couteau de sectionnement (205) sont placées sur le cadre de base, le transformateur de courant (1) est installé sur les extrémités de la colonne de support de transformateur de courant (201) et de la colonne de support de couteau de sectionnement (205), à l'opposé du cadre de base, une extrémité du couteau de sectionnement (211) est fixée sur la colonne de support de couteau de sectionnement (205), une section centrale du couteau de sectionnement (211) est connectée au mécanisme d'entraînement par un arbre de goupille, une extrémité du mécanisme d'entraînement opposée au couteau de sectionnement (211) est connectée au cadre de base, le mécanisme d'entraînement à isolement électrique (5) est placé sur un côté du cadre de base, le mécanisme d'entraînement à isolement électrique (5) est connecté au mécanisme d'entraînement, le mécanisme d'entraînement à isolement électrique (5) est configuré pour entraîner le mécanisme d'entraînement et pour réaliser l'ouverture et la fermeture du couteau de sectionnement (211), et le panneau isolant de sectionnement (210) est installé entre le cadre de base et le fusible de type jet extérieur (6).

3. Appareillage de commutation extérieur intelligent selon la revendication 2, dans lequel le mécanisme d'entraînement comprend un arbre d'entraînement (204), un bras de manivelle de maintien (206), un bras de manivelle d'entraînement (207) et une première bielle d'entraînement (209) ; et
l'arbre d'entraînement (204) passe à travers le cadre de base, le mécanisme d'entraînement à isolement électrique (5) est connecté à l'arbre d'entraînement (204), le mécanisme d'entraînement à isolement électrique (5) est configuré pour entraîner l'arbre d'entraînement (204) et pour réaliser l'ouverture et la fermeture du couteau de sectionnement (211), le bras de manivelle de maintien (206) et le bras de manivelle d'entraînement (207) sont placés sur l'arbre d'entraînement (204) à un intervalle par des arbres de goupille, l'arbre d'entraînement (204) est connecté à une extrémité du bras de manivelle de maintien (206) et à une extrémité du bras de manivelle d'entraînement (207), respectivement, une autre extrémité du bras de manivelle de maintien (206) est installée sur le cadre de base, et une autre extrémité du bras de manivelle d'entraînement (207) est connectée au couteau de sectionnement (211) par l'intermédiaire de la première bielle d'entraînement (209).

4. Appareillage de commutation extérieur intelligent selon la revendication 3, dans lequel le cadre de base comprend un panneau droit (203) du cadre de base, un panneau transversal (208) du cadre de base, une traverse (212) du cadre de base et un panneau gauche (213) du cadre de base ; et
le panneau droit (203) du cadre de base et le panneau gauche (213) du cadre de base sont placés en face l'un de l'autre, chacune de deux extrémités de l'arbre d'entraînement (204) pénètre à travers un panneau respectif du panneau droit (203) du cadre de base et du panneau gauche (213) du cadre de base, le panneau transversal (208) du cadre de base et la traverse (212) du cadre de base sont placés entre le panneau droit (203) du cadre de base et le panneau gauche (213) du cadre de base, le fusible de type jet extérieur (6) est placé sur un côté du panneau transversal (208) du cadre de base, le panneau isolant de sectionnement (210) est installé entre le panneau transversal (208) du cadre de base et le fusible de type jet extérieur (6), la traverse (212) du cadre de base est installée sur la partie inférieure du disjoncteur extérieur et est sur le même côté que le transformateur de courant (1), et le mécanisme d'entraînement à isolement électrique (5) est placé sur le panneau gauche (213) du cadre de base.

5. Appareillage de commutation extérieur intelligent selon la revendication 4, dans lequel le mécanisme d'entraînement comprend en outre un levier de commande manuelle (202), et le levier de commande manuelle (202) est placé sur une extrémité de l'arbre d'entraînement (204) pénétrant à travers le panneau droit (203) du cadre de base.

6. Appareillage de commutation extérieur intelligent selon la revendication 4, dans lequel le mécanisme d'entraînement à isolement électrique (5) comprend un mécanisme d'ouverture, un mécanisme de fermeture et un dispositif d'arrêt, le mécanisme d'ouverture et le mécanisme de fermeture sont placés à un intervalle sur une extrémité de l'arbre d'entraînement (204) pénétrant à travers le panneau gauche (213) du cadre de base, et le dispositif d'arrêt est placé entre le mécanisme d'ouverture et le panneau gauche (213) du cadre de base.

7. Appareillage de commutation extérieur intelligent selon la revendication 6, dans lequel le mécanisme d'ouverture comprend un moteur d'entraînement (502), un pignon d'entraînement (503), une roue dentée entraînée (504), une microcame (505) et un commutateur d'arrêt d'ouverture (506) ;
le moteur d'entraînement (502) est installé sur le panneau gauche (213) du cadre de base, un côté du moteur d'entraînement (502) opposé au panneau gauche (213) du cadre de base est connecté au pignon d'entraînement (503), la roue dentée entraînée (504) est placée au-dessus du pignon d'entraînement (503), le pignon d'entraînement (503) est connecté à la roue dentée entraînée (504) et entraîne la roue dentée entraînée (504) à tourner, et la roue dentée entraînée (504) et la microcame (505) sont installées sur l'arbre d'entraînement (204) ; et
lorsque l'arbre d'entraînement (204) tourne vers une position d'ouverture, la roue dentée entraînée (504) entraîne la microcame (505) et l'arbre d'entraînement (204) à tourner simultanément afin d'entrer en contact avec le commutateur d'arrêt d'ouverture (506), et le commutateur d'arrêt d'ouverture (506) fonctionne pour couper une alimentation électrique du moteur d'entraînement (502).

8. Appareillage de commutation extérieur intelligent selon la revendication 7, dans lequel le mécanisme de fermeture comprend un commutateur d'arrêt de fermeture (501), une manivelle d'entraînement (507), une seconde bielle d'entraînement (508) et une plaque fixe d'interverrouillage (511) ;
une extrémité de la manivelle d'entraînement (507) est installée sur l'arbre d'entraînement (204), une autre extrémité de la manivelle d'entraînement (507) est installée sur la seconde bielle d'entraînement (508), une extrémité de la seconde bielle d'entraînement (508) opposée à la manivelle d'entraînement (507) est connectée à la plaque fixe d'interverrouillage (511), la plaque fixe d'interverrouillage (511) est placée sur le disjoncteur extérieur, l'arbre d'entraînement (204) entraîne la manivelle d'entraînement (507) à tourner, et la manivelle d'entraînement (507) entraîne la seconde bielle d'entraînement (508) à se déplacer ; et
lorsque l'arbre d'entraînement (204) tourne vers une position de fermeture, la roue dentée entraînée (504) entraîne la microcame (505) et l'arbre d'entraînement (204) à tourner simultanément afin d'entrer en contact avec le commutateur d'arrêt de fermeture (501), et le commutateur d'arrêt de fermeture (501) fonctionne pour couper l'alimentation électrique du moteur d'entraînement (502).

9. Appareillage de commutation extérieur intelligent selon la revendication 6, dans lequel l'appareil d'arrêt comprend un bloc d'arrêt inférieur (509), un bloc mécanique (510) et un bloc d'arrêt supérieur (512) ;
le bloc d'arrêt inférieur (509) et le bloc d'arrêt supérieur (512) sont installés sur une paroi latérale du panneau gauche (213) du cadre de base, le bloc mécanique (510) est installé sur l'arbre d'entraînement (204), et le mécanisme d'ouverture est installé sur une extrémité du bloc mécanique (510) opposée à l'arbre d'entraînement (204) ;
lorsque l'arbre d'entraînement (204) tourne dans le sens antihoraire sous l'action d'un moteur d'entraînement (502), le bloc mécanique (510) entre en contact avec le bloc d'arrêt inférieur (509), le bloc d'arrêt inférieur (509) limite le déplacement du bloc mécanique (510), et la fermeture est en place ; et
lorsque l'arbre d'entraînement (204) tourne dans le sens horaire sous l'action du moteur d'entraînement (502), le bloc mécanique (510) entre en contact avec le bloc d'arrêt supérieur (512), le bloc d'arrêt supérieur (512) limite le déplacement du bloc mécanique (510), et la fermeture est en place.

10. Appareillage de commutation extérieur intelligent selon l'une quelconque des revendications 1 à 9, dans lequel le disjoncteur extérieur comprend un pôle (3) du disjoncteur extérieur et un mécanisme (4) du disjoncteur extérieur ; et
le pôle (3) du disjoncteur extérieur est installé sur le mécanisme (4) du disjoncteur extérieur, le mécanisme (4) du disjoncteur extérieur est installé sur un côté du mécanisme de commutateur d'isolement (2), et une extrémité de sortie du pôle (3) du disjoncteur extérieur est connectée au transformateur de courant (1).
